# EUROPEAN PATENT APPLICATION

(11) **EP 1 263 073 A1**
(43) Date of publication of application: **04.12.2002**
(21) Application number: 02011619.0
(22) Date of filing: 28.05.2002
(51) Int. Cl.: H01M 8/10, C08J 5/22, B01D 69/12

(54) **Membrane-electrode assembly for solid polymer electrolyte fuel cells and process for its production**

(30) Priority: 31.05.2001 JP 2001164820
(71) Applicant: Asahi Glass Co., Ltd., Tokyo 100-8405 (JP)
(72) Inventor: Mukoyama, Atsushi, Kanagawa-ku, Yokohama-shi, Kanagawa (JP); Kinoshita, Shinji, Kanagawa-ku, Yokohama-shi, Kanagawa (JP); Ishisaki, Toyoaki, deceased (JP)
(74) Representative: Müller-Boré & Partner Patentanwälte

(57) **Abstract**

A process for producing a membrane-electrode assembly for solid polymer electrolyte fuel cells, which comprises bonding electrodes having a catalyst layer containing a catalyst as a cathode and an anode onto both sides of a cation exchange membrane as a solid polymer electrolyte membrane, wherein the cation exchange membrane is formed from a dispersion having a fluorinated polymer having sulfonic acid groups as an ion exchange polymer and a fibrilliform fluorocarbon polymer dispersed in a dispersion medium.

## Description

The present invention relates to a membrane-electrode assembly for solid polymer electrolyte fuel cells, a process for its production and a solid polymer electrolyte fuel cell comprising the membrane-electrode assembly.

The hydrogen-oxygen fuel cell receives attention as a power generating system having little adverse effect on the global environment because in principle, its reaction product is water only. Solid polymer electrolyte fuel cells were once mounted on spaceships in the Gemini project and the Biosatellite project, but their power densities at the time were low. Later, more efficient alkaline fuel cells were developed and have dominated the fuel cell applications in space including space shuttles in current use.

Meanwhile, with the recent technological progress, solid polymer fuel cells are drawing attention again for the following two reasons: (1) the development of highly ion-conductive membranes for use as solid polymer electrolytes and (2) the impartment of high activity to the catalysts for use in gas diffusion electrodes by the use of carbon as the support and an ion exchange resin coating.

For improved performance, the electric resistance of solid polymer membrane electrolytes can be reduced through increase in their sulfonic acid group concentration or reduction in membrane thickness. However, drastic increase in sulfonic acid group density causes problems such as deterioration of the mechanical and tensile strength of membrane electrolytes or dimensional change during handling or deterioration of their durability that makes them vulnerable to creeping during long operation. On the other hand, thinner membranes have lower mechanical and tensile strength, and therefore, are problematically difficult to process or handle when get attached to gas diffusion electrodes.

In pursuit of improvement in performance, a thinner catalyst layer having a high platinum content was attempted. However, with a brittle catalyst phase and an ion exchange resin matrix usually formed from a solution by coating, such a thin catalyst layer tends to be unsatisfactory for mechanical properties such as compressive creeping properties and elasticity modulus and has a problem with durability.

As a solution to the above-mentioned problems, a polytetrafluoroethylene (hereinafter referred to as PTFE) porous membrane impregnated with a fluorinated ion exchange polymer having sulfonic acid groups was proposed (JP-B-5-75835). Although this solution can provide a thin membrane, there is still a problem that the inclusion of the porous PTFE prevents the electric resistance of the membrane from being lowered sufficiently. Besides, when it is used as an electrolyte membrane in a solid polymer electrolyte fuel cell, the hydrogen gas leaks increasingly during long operation of the cell due to the poor adhesion between the porous PTFE and the ion exchange polymer, and as a result, there is a problem of decline of the performance of the cell.

As a solution to the problem of the high electric resistance of the membrane, a cation exchange membrane reinforced with a perfluorocarbon polymer in the form of fibrils, woven fabric or nonwoven fabric was proposed (JP-A-6-231779). The membrane has low resistance and can provide a fuel cell with relatively good power generation characteristics, but since the membrane with a minimum thickness of 100 to 200 µm is not thin enough and not even in thickness, there are problems in power generation characteristics and applicability to mass production. Further, because the membrane shows high permeability to hydrogen gas due to the insufficient adhesion between the perfluorocarbon polymer and the fluorinated ion exchange polymer having sulfonic acid groups, a fuel cell using it can not generate sufficient power.

The object of the present invention is to provide a process for producing an electrolyte membrane and/or a catalyst layer for solid polymer electrolyte fuel cells which is isotropic and has a uniform and small thickness, a low resistance and low permeability to hydrogen gas, dimensional stability against moisture and heat, high tear strength and good handling properties and can be put into mass production, and a solid polymer electrolyte fuel cell showing good power generation characteristics and durability using the resulting electrolyte membrane and/or the catalyst.

The present invention provides a process for producing a membrane-electrode assembly for solid polymer electrolyte fuel cells, which comprises bonding electrodes having a catalyst layer containing a catalyst as a cathode and an anode onto both sides of a cation exchange membrane as a solid polymer electrolyte membrane, wherein the cation exchange membrane is formed from a dispersion having a fluorinated polymer having sulfonic acid groups as an ion exchange polymer and a fibrilliform fluorocarbon polymer dispersed in a dispersion medium.

The present invention also provides a process for producing a membrane-electrode assembly for solid polymer electrolyte fuel cells, which comprises bonding electrodes having a catalyst layer containing a catalyst as a cathode and an anode onto both sides of a cation exchange membrane as a solid polymer electrolyte membrane, wherein the catalyst layer of the cathode and/or the anode is formed from a mixture of a dispersion having a fluorinated polymer having sulfonic acid groups as an ion exchange polymer and a fibrilliform fluorocarbon polymer dispersed in a dispersion medium, and a catalyst.

The present invention further provides a membrane-electrode assembly for solid polymer electrolyte fuel cells which comprises a cation exchange membrane as a solid polymer electrolyte membrane and electrodes having a catalyst layer containing a catalyst as a cathode and an anode bonded onto both sides of the cation exchange membrane, wherein the catalyst layer of the cathode and/or the catalyst layer of the anode comprises a fluorinated polymer having sulfonic acid groups as an ion exchange polymer, a fibrilliform fluorocarbon polymer and a catalyst, and a solid polymer electrolyte fuel cell comprising the membrane-electrode assembly wherein an oxygen-containing gas and a hydrogen-containing gas are fed to the cathode and the anode, respectively.

An ion exchange membrane obtained from the ion exchange polymer dispersion of the present invention having an ion exchange polymer and a fibrilliform fluorocarbon polymer dispersed in a dispersion medium (hereinafter referred to as the dispersion of the present invention) contains the fibrilliform fluorocarbon polymer uniformly in the plane of the membrane as a reinforcement (hereinafter referred to as the present reinforcement). An ordinary membrane containing the present reinforcement obtained by extrusion molding is anisotropic and shows different strengths in MD (the direction of the extrusion during the molding of the membrane) and in TD (the transverse direction which is perpendicular to MD) with the fibrils oriented in the MD. An ion exchange membrane obtained from the dispersion of the present invention is less anisotropic, even possibly isotropic, and shows improved tear strength, tensile strength and other mechanical strengths in all directions.

Therefore, a membrane-electrode assembly using such a membrane as an electrolyte membrane is easy to handle, and its dimensional change due to heat or moisture is very little and isotropic. Thus, a membrane-electrode assembly having a thin cation exchange membrane, which used to be difficult to produce, can be produced easily.

Since membranes obtained from the dispersion of the present invention have high mechanical strength in all directions irrespective of the MD or TD direction, membrane-electrode assemblies using such membranes have excellent durability. The gas supplied to the anode and cathode of a solid polymer electrolyte fuel cell is quite often humidified nearly to saturated vapor pressure to secure the proton conductivity of the ion exchange polymer in the catalyst layer (hereinafter referred to as the catalyst layer resin) and the membrane. However, a simulation of the current density and the steam concentration in a membrane-electrode assembly revealed uneven distributions of current density, moisture and vapor pressure over the entire surface which suggest a high possibility of uneven and local shrinkage or swelling of the assembly due to dehydration of part of the membrane or the catalyst layer resin in the catalyst layer which is exposed to locally generated heat. The present reinforcement evenly distributed in the membrane controls mechanical deformation and cracking resulting from the local shrinkage or swelling and imparts excellent durability to a membrane-electrode assembly having a membrane as thin as at most 30 µm.

The dispersion of the present invention may also be used as a mixture with a powdery catalyst to form a catalyst layer. Namely, a membrane-electrode assembly having a catalyst layer containing a fibrilliform fluorocarbon polymer as a reinforcement (the present reinforcement) is obtainable from a mixture of the dispersion of the present invention and a powdery catalyst. Incorporation of the present reinforcement in a catalyst layer improves the tensile modulus and the catalyst layer resin and the mechanical properties of the catalyst layer and therefore the service life of the membrane-electrode assembly.

In the present invention, as the fibrilliform fluorocarbon polymer, a PTFE or a copolymer containing at least 95 mol% of polymerization units derived from tetrafluoroethylene may be mentioned. Such a copolymer has to be able to fibrillate and is preferably a copolymer of tetrafluoroethylene and a fluorinated monomer which preferably comprises at least 99 mol% of polymerization units derived from tetrafluoroethylene. Specifically, a PTFE, a tetrafluoroethylene-hexafluoropropylene copolymer, a tetrafluoroethylene-chlorotrifluoroethylene copolymer, a tetrafluoroethylene-perfluoro(2,2-dimethyl-1,3-dioxole) copolymer, or a tetrafluoroethylene-perfluoro(alkyl vinyl ether) such as a tetrafluoroethylene-perfluoro(butenyl vinyl ether) copolymer may be mentioned. Particularly preferred is a PTFE.

The dispersion of the present invention preferably contains the fibrilliform fluorocarbon polymer in an amount of from 0.5 to 15 mass% of the total solid content of the dispersion. If it is less than 0.5 mass%, the polymer does not show sufficient reinforcing effect, and if it exceeds 15 mass%, high resistance is likely to result. The fibrilliform fluorocarbon polymer is preferably in an amount of from 2 to 10 mass% of the total solid content to exert sufficient reinforcing effect without increase in resistance and facilitate formation of an electrolyte membrane or a catalyst layer by preventing the dispersion of the present invention from becoming too viscous. Here, the amount of the fibrilliform fluorocarbon polymer means the total amount of the fluorocarbon polymer which can fibrillate irrespective of whether it is fibrillated or not, and includes the polymer both in the unfibrillated form and under fibrillation as well. For example, if the polymer is PTFE, it is the PTFE content based on the total mass of the solid matter in it.

As the fluorinated polymer having sulfonic acid groups in the present invention, a wide variety of known polymers may be used. However, it is preferably a copolymer consisting of polymerization units derived from a perfluorovinyl compound represented by the general formula CF₂=CF(OCF₂CFX)ₘ-Oₚ- (CF₂)ₙSO₃H (wherein X is a fluorine atom or a trifluoromethyl group, m is an integer of from 0 to 3, n is an integer of from 0 to 12, and p is 0 or 1, provided that when n is 0, p is also 0) and polymerization units derived from a perfluoroolefin or a perfluoroalkyl vinyl ether. As the perfluorovinyl compound, for example, the compound represented by any of the following formulae 1 to 4 may be mentioned. In the formulae 1 to 4, q is an integer of from 1 to 9, r is an integer of from 1 to 8, s is an integer of from 0 to 8, and z is 2 or 3.

CF₂=CFO(CF₂)_{q}SO₃H formula 1

CF₂=CFOCF₂CF(CF₃)O(CF₂)ᵣSO₃H formula 2

CF₂=CF(CF₂)ₛSO₃H formula 3

CF₂=CF[OCF₂CF(CF₃)]_{z}OCF₂CF₂SO₃H formual 4

The polymer having sulfonic acid groups which comprises polymerization units derived from a perfluorovinyl compound is usually obtained by polymerization of a perfluorovinyl compound having a -SO₂F group. The perfluorovinyl compound having a -SO₂F group is usually due to small radical polymerization reactivity copolymerized with a comonomer such as a perfluoroolefin or a perfluoro(alkyl vinyl ether), though it may be polymerized alone. The perfluoroolefin as a comonomer may, for example, tetrafluoroethylene, hexafluoropropylene or the like. Usually, the use of tetrafluoroethylene is preferred.

The perfluoro(alkyl vinyl ether) as a comonomer is preferably a compound represented by CF₂=CF-(OCF₂CFY)ₜ-O-R^{f} wherein Y is a fluorine atom or a trifluoromethyl group, t is an integer of from 0 to 3, and R^{f} is a linear or branched perfluoroalkyl group represented by CᵤF₂ᵤ₊₁ (1 ≦u≦12). Preferable examples of the compound represented by CF₂=CF-(OCF₂CFY)ₜ-O-R^{f} include compounds represented by the formulae 5 to 7. In the formulae 5 to 7, v is an integer of from 1 to 8, w is an integer of from 1 to 8, and x is an integer of from 1 to 3.

CF₂=CFO(CF₂)ᵥCF₃ formula 5

CF₂=CFOCF₂CF(CF₃)O(CF₂)_{w}CF₃ formula 6

CF₂=CF[OCF₂CF(CF₃)]ₓO(CF₂)₂CF₃ formula 7

In addition to a perfluoroolefine or a perfluoro(alkyl vinyl ether), other fluorinated monomers such as perfluoro(3-oxahepta-1,6-diene) may be copolymerized as a copolymer with the perfluorovinyl compound having a -SO₂F group.

In the present invention, the sulfonic acid group concentration, i.e. the ion exchange capacity, of the fluorinated polymer having sulfonic acid groups, as the constituent of the electrolyte membrane and/or the catalyst layer resin, is preferably from 0.5 to 2.0 meq/g dry resin, especially from 0.7 to 1.6 meq/g dry resin. If the ion exchange capacity is below this range, the resistance of the resulting electrolyte membrane and/or the catalyst layer resin tends to be large, while if the ion exchange capacity is above this range, the mechanical strength of the electrolyte membrane and/or the catalyst layer resin tends to be insufficient.

The dispersion medium in the dispersion of the present invention is not particularly limited and is exemplified below.

Monohydric alcohols such as methyl alcohol, ethyl alcohol, n-propyl alcohol, n-butyl alcohol and isopropyl alcohol and polyhydric alcohols such as ethylene glycol, propylene glycol and glycerin.

Fluorinated alcohols such as 2,2,2-trifluoroethanol, 2,2,3,3,3-pentafluoro-1-propanol, 2,2,3,3-tetrafluoro-1-propanol, 2,2,3,4,4,4-hexafluoro-1-butanol, 2,2,3,3,4,4,4-heptafluoro-1-butanol and 1,1,1,3,3,3-hexafluoro-2-propanol.

Oxygen- or nitrogen-containing perfluoro compounds such as perfluorotributylamine and perfluoro-2-n-butyltetrahydrofuran, chlorofluorocarbons such as 1,1,2-trichloro-1,2,2-trifluoroethane, hydrochlorofluorocarbons such as 3,3-dichloro-1,1,1,2,2-pentafluoropropane, 1,3-dichloro-1,1,2,2,3-pentafluoropropane, and polar solvents such as N,N-dimethylformamide, N,N-dimethylacetamide, dimethyl sulfoxide and water may be used.

These dispersion media may be used singly or in combination of at least two.

The concentration of the dispersion of the present invention is preferably such that the amount of the ion exchange polymer is from 0.3 to 30 mass% of the total mass of the dispersion. If it is less than 0.3 mass%, evaporation of the dispersion medium takes long time or reduction of the evaporation time requires heating at high temperature which leads to irreversible size reduction of the ion clusters in the ion exchange resin or lower proton conductivity. If the concentration is higher than 30 mass%, the dispersion of the present invention is too viscous and shows poor coating properties in formation of an electrolyte membrane or a catalyst layer. Further, in a catalyst layer obtained by dispersing a catalyst in the dispersion of the present invention, the catalyst layer resin can form such a thick coating on the catalyst that the cell performance is impaired. The particularly preferable concentration is from 5 to 25 mass%.

In the present invention, as the catalyst in the catalyst layer, platinum or a platinum alloy supported by a carbonaceous material such as carbon black or active carbon having a specific surface area of the order of from 50 to 2000 m²/g is preferable. Such a platinum alloy is preferably an alloy of platinum with at least one metal selected from the group consisting of the metals in the same group as platinum (such as ruthenium, rhodium, palladium, osmium and indium), gold, silver, chromium, iron, titanium, manganese, cobalt, nickel, molybdenum, tungsten, aluminum, silicon, zinc and tin. The cathode and the anode may contain the same or different catalysts.

There is no particular restriction on the thicknesses of the catalyst layer and the electrolyte membrane in the present invention. However, the thickness of the electrolyte membrane is preferably at most 80 µm, particularly at most 70 µm, more preferably at most 50 µm. If the electrolyte membrane is thicker than 80 µm, the electrolyte membrane between the cathode and the anode tends to be dry due to the small steam concentration gradient in the membrane. A dry electrolyte membrane having low proton conductivity and large resistance can lower the cell performance. Though the thinner the electrolyte membrane is, the better from the above-mentioned point of view, an excessively thin electrolyte membrane can make a short-circuit or carry a low open-circuit voltage due to the high permeability to hydrogen gas. Therefore, the thickness is preferably from 5 to 70 µm, particularly from 10 to 50 µm.

The catalyst layer is preferably at most 20 µm thick, to facilitate the gas diffusion through the catalyst layer and improve the cell characteristics, and is also preferred to be even and smooth. The process of the present invention can afford a catalyst layer with an even thickness of 20 µm or less. Reduction in the thickness of a catalyst layer can lower the reaction activity because a thinner catalyst layer can bear a small amount of a catalyst per unit area. The use of a platinum or a platinum alloy supported carbon with a high amount of the metals as the catalyst makes it possible to keep the reaction activity high while reducing the thickness of the catalyst layer without shortage of the catalyst amount. From the above-mentioned point of view, the thickness of the catalyst layer is preferably from 1 to 15 µm.

Although there is no particular restriction on how to prepare the dispersion of the present invention, it is prepared, for example, as follows. Powder of a fluorinated polymer having -SO₂F groups and powder of a fluorocarbon polymer which can fibrillate are mixed and pelletized by a twin screw extrusion. For further fibrillation of the fluorocarbon polymer, the pellets may be molded into film by extrusion. Then, the resulting pellets or film is subjected to hydrolysis or acid treatment to convert the -SO₂F groups into sulfonic acid groups (-SO₃H groups). It is preferable to pulverize the pellets or film to a powder having particle sizes of the order of from 100 µm to 1 mm by means of a pulverizer such as a freeze pulverizer before the pellets or film is dispersed in the dispersion medium because it facilitates the dispersion.

During the kneading (and film formation by extrusion) by a twin screw extruder, the fluorocarbon polymer which can fibrillate fibrillates by the shearing force applied to it. The presence of the fibrilliform fluorocarbon polymer in the dispersion of the present invention can be confirmed with a scanning electron microscope (an SEM), for example, after removal of the dispersion medium from the dispersion, specifically by the following method.

The dispersion of the present invention is so dropped in a petri dish as to have a uniform thickness of about 30 µm upon drying and maintained in an oven at 60°C for 3 hours to form a cast film. The cast film is peeled off the petri dish and observed under an SEM at a magnification of from 5000 to 10000 after plasma etching on the surface. When the dispersion of the present invention is prepared by the above-mentioned method, the fibrillated fluorocarbon polymer can be seen as short fibers.

The electrodes of the membrane-electrode assembly of the present invention, inclusive of the cathode and the anode, may be composed of catalyst layers alone. However, porous electric conductors such as carbon cloths or carbon paper may be put as gas diffusion layers on both sides of the membrane-electrode assembly to secure uniform gas diffusion throughout the catalyst layer and function as a current collector. The gas diffusion layers may not only be put but also bonded by hot pressing onto outer surfaces of the catalyst layers.

The solid polymer electrolyte fuel cell may, for example, have a separator having grooves as the gas channels on each side, and the cathodic separator is supplied with an oxygen-containing gas such as air, while the anodic separator is supplied with a hydrogen-containing gas, when the cell is in operation. A plurality of membrane-electrode assemblies may be piled up into a stack by interposing separators.

There is no particular restriction on how to prepare a membrane-electrode assembly from the dispersion of the present invention. However, for example, additionally supplied two substrates coated with a catalyst layer coating solution having a catalyst and a catalyst layer resin dispersed therein and then coated with the dispersion of the present invention to form an ion exchange membrane may be adhered by hot pressing with the ion exchange membranes faced inside to give a membrane-electrode assembly having a membrane based on the laminated two ion exchange membranes as an electrolyte membrane. Three substrates may be coated with a coating solution for an anodic catalyst layer, with a coating solution for a cathodic catalyst layer and with the dispersion of the present invention, separately, to form an anodic catalyst layer, a cathodic catalyst layer and an ion exchange membrane, then peeling the ion exchange membrane off the substrate, hot-pressing the anodic catalyst layer and the cathodic catalyst layer so as to interpose the ion exchange membrane therebetween.

In the case where both an ion exchange membrane and a catalyst layer contain fibrilliform fluorocarbon polymer, a mixed dispersion from the dispersion of the present invention and a catalyst may be used as coating solution to form a catalyst layer in the above-mentioned procedures. In the case of an ion exchange membrane which is not obtained from the dispersion of the present invention, various known methods may be employed. For example, (1) both sides of such an ion exchange membrane may be coated with the dispersion of the present invention, (2) two gas diffusion layers having catalyst layers formed from a coating solution containing the dispersion of the present invention may be hot-pressed so as to interpose an ion exchange membrane, or (3) two substrates having catalyst layers formed from a coating solution containing the dispersion of the present invention may be hot-pressed with an ion exchange membrane interposed therebetween to transfer the catalyst layers onto the ion exchange membrane.

### [EXAMPLE 1 (Example)]

9730 g of a powdery copolymer consisting of polymerization units derived from tetrafluoroethylene and polymerization units derived from CF₂=CF-OCF₂CF(CF₃)O(CF₂)₂SO₂F (with an ion exchange capacity of 1.1 meq/g dry resin; hereinafter referred to as copolymer A) and 270 g of a powdery PTFE (product name: Fluon CD-1, manufactured by Asahi Glass Company, Ltd.) were mixed and extruded with a twin screw extruder to give pellets (9500 g). The pellets were pulverized with a freeze pulverizer, then hydrolyzed in an aqueous solution containing 30%, based on the total mass of the solution, of dimethyl sulfoxide and 15%, based on the total mass of the solution, of potassium hydroxide, immersed in 1 mol/L hydrochloric acid for 16 hours for conversion into the acid form (sulfonic acid groups), washed with water and dried.

The pellets were dispersed in ethanol to give an ion exchange polymer dispersion (hereinafter referred to as the dispersion a) containing the fibrilliform fluorocarbon polymer which had a dispersoid content of 10%, based on the total mass of the dispersion) and contained (2.7%, based on the solute) of the fibrilliform fluorocarbon polymer and the perfluorocarbon polymer having sulfonic acid groups.

An ethanol solution or dispersion containing a copolymer consisting of polymerization units derived from tetrafluoroethylene and polymerization units derived from CF₂=CF-OCF₂CF(CF₃)O(CF₂)₂SO₂F and a platinum-ruthenium alloy-supported carbon (with a platinum:ruthenium molar ratio of 4:6 and a carbon:alloy mass ratio of 1:1) in a mass ratio of 5:9 was prepared as a dispersion for formation of an anodic catalyst layer.

Further, a dispersion with a solid content of 13.7 mass% containing the same copolymer and a platinum-supported carbon (with a platinum:carbon mass ratio of 1:1) in a mass ratio of 1:2 and ethanol as a dispersion medium was prepared for formation of a cathodic catalyst layer.

The dispersion for formation of an anodic catalyst layer was casted on one side of a polypropylene (hereinafter referred to as PP) film with a 50 µm thickness as a substrate by die coating so that the platinum-ruthenium alloy would attach in an amount of 0.50 mg/cm², and the coating was dried to form an anodic catalyst layer. Likewise, the dispersion for formation of a cathodic catalyst layer was casted on one side of another PP film with a 50 µm thickness as a substrate by die coating so that the platinum ruthenium would attach in an amount of 0.40 mg/cm², and the coating was dried to form a cathodic catalyst layer.

Then, still another PP film was coated with dispersion a by die coating and dried in an oven at 80 °C for 10 minutes to form an ion exchange membrane with a 30 µm thickness reinforced by a fibrilliform fluorocarbon polymer.

The PP film having the cathodic catalyst layer on one side and the PP film having the anodic catalyst layer on one side were laid with the catalyst layers faced inside, and the ion exchange membrane that was prepared by releasing from the PP film was interposed between them. They were hot-pressed at 130°C under 3 MPa for 4 minutes. After the hot-pressing, the cathodic and anodic catalyst layer were peeled off the PP films and transferred onto the ion exchange membrane to form a membrane-electrode assembly consisting of the catalyst layers and the ion exchange membrane.

The membrane-electrode assembly was cut to an effective electrode surface area of 25 cm², and mounted in a cell performance tester. Hydrogen gas and air were supplied to the anode and the cathode, respectively, and a power generation test was carried out at a cell temperature of 80°C. The initial output voltage and the output voltage after 1000 hours of operation at a current density of 0.2 A/cm² were measured. The results are shown in Table 1.

### [EXAMPLE 2 (Example)]

A dispersion (hereinafter referred to as dispersion b) was prepared in the same manner as in Example 1 except that 9600 g of the powdery copolymer A and 400 g of the powdery PTFE were used for preparation of pellets. A membrane-electrode assembly was prepared in the same manner as in Example 1 except that dispersion b was used instead of dispersion a for formation of an ion exchange membrane. The resulting membrane-electrode assembly was mounted in a cell performance tester and tested in the same manner as in Example 1. The results are shown in Table 1.

### [EXAMPLE 3 (Example)]

A dispersion was prepared in the same manner as in Example 1 except that 9300 g of the powdery copolymer A and 700 g of the powdery PTFE were used for preparation of pellets. A membrane-electrode assembly was prepared in the same manner as in Example 1 except that ther resulting dispersion was used instead of dispersion a for formation of an ion exchange membrane. The resulting membrane-electrode assembly was mounted in a cell performance tester and tested in the same manner as in Example 1. The results are shown in Table 1.

### [EXAMPLE 4 (Example)]

The same platinum-supported carbon as used in Example 1 was dispersed in a dispersion so that the mass ratio of the total of the fibrilliform fluorocarbon polymer and the ion exchange polymer to the platinum-supported carbon would be 1:2 to form a dispersion with a solid content of 13.7 mass% containing ethanol as the dispersion medium. A membrane-electrode assembly was prepared in the same manner as in Example 1 except that the resulting dispersion was used as a dispersion for formation of a cathodic catalyst layer to form a cathodic catalyst layer.

The membrane-electrode assembly was mounted in a cell performance tester and tested in the same manner as in Example 1. The results are shown in Table 1.

### [EXAMPLE 5 (Comparative Example)]

The dispersion used in Example 1 for formation of an anodic catalyst layer was casted on one side of a PP film with a 50 µm thickness as a substrate by die coating so that the platinum-ruthenium alloy would attach in an amount of 0.50 mg/cm², and the coating was dried to form an anodic catalyst layer. Likewise, the dispersion for formation of a cathodic catalyst layer was spread on one side of another PP film with a 50 µm thickness as a substrate by die coating so that the platinum ruthenium would attach in an amount of 0.40 mg/cm², and the coating was dried to form a cathodic catalyst layer.

The resulting two sheets were laid with the catalyst layers faced inside, and an ion exchange membrane made of a sulfonated perfluorocarbon polymer (with an ion exchange capacity of 1.1 meq/g dry resin and a dry thickness of 30 µm; product name: Flemion HR, Asahi Glass Company, Ltd.) was interposed between them. They were hot-pressed at 130 °C under 3 MPa for 4 minutes. After the hot-pressing, the cathodic and anodic catalyst layer were peeled off the substrate sheets and transferred onto the ion exchange membrane to form a membrane-electrode assembly consisting of the catalyst layers and the ion exchange membrane.

The membrane-electrode assembly was mounted in a cell performance tester and tested in the same manner as in Example 1. The results are shown in Table 1.

**Table 1**

| | Output voltage (V) | |
|---|---|---|
| | Initial | After 1000 hours |
| Example 1 | 0.75 | 0.70 |
| Example 2 | 0.74 | 0.71 |
| Example 3 | 0.72 | 0.70 |
| Example 4 | 0.72 | 0.70 |
| Example 5 | 0.75 | 0.62 |

According to the present invention, it is possible to obtain a membrane-electrode assembly having a thin and low resistance electrolyte membrane and/or catalyst layers with a uniform thickness and high tear strength. A solid polymer electrolyte fuel cell having the membrane-electrode assembly shows good power generation characteristics and durability. The process of the present invention is suitable for mass production.

The entire disclosure of Japanese Patent Application No. 2001-164820 filed on May 31, 2001 including specification, claims and summary are incorporated herein by reference in its entirety.

## Claims

1. A process for producing a membrane-electrode assembly for solid polymer electrolyte fuel cells, which comprises bonding electrodes having a catalyst layer containing a catalyst as a cathode and an anode onto both sides of a cation exchange membrane as a solid polymer electrolyte membrane, wherein the cation exchange membrane is formed from a dispersion having a fluorinated polymer having sulfonic acid groups as an ion exchange polymer and a fibrilliform fluorocarbon polymer dispersed in a dispersion medium.

2. A process for producing a membrane-electrode assembly for solid polymer electrolyte fuel cells, which comprises bonding electrodes having a catalyst layer containing a catalyst as a cathode and an anode onto both sides of a cation exchange membrane as a solid polymer electrolyte membrane, wherein the catalyst layer of the cathode and/or the anode is formed from a mixture of a dispersion having a fluorinated polymer having sulfonic acid groups as an ion exchange polymer and a fibrilliform fluorocarbon polymer dispersed in a dispersion medium, and a catalyst.

3. The process for producing a membrane-electrode assembly for solid polymer electrolyte fuel cells according to Claim 2, wherein the cation exchange membrane is formed from a dispersion having a fluorinated polymer having sulfonic acid groups as an ion exchange polymer and a fibrilliform fluorocarbon polymer dispersed in a dispersion medium.

4. The process for producing a membrane-electrode assembly for solid polymer electrolyte fuel cells according to any one of Claims 1 to 3, wherein the dispersion contains the fibrilliform fluorocarbon polymer in an amount of from 0.5 to 15 mass% of the solid mass of the dispersion.

5. The process for producing a membrane-electrode assembly for solid polymer electrolyte fuel cells according to any one of Claims 1 to 4, wherein the fibrilliform fluorocarbon polymer is a polytetrafluoroethylene or a copolymer comprising at least 95 mol% of polymerization units derived from tetrafluoroethylene.

6. The process for producing a membrane-electrode assembly for solid polymer electrolyte fuel cells according to any one of Claims 1 to 5, wherein the fluorinated polymer having sulfonic acid groups is a copolymer comprising polymerization units derived from tetrafluoroethylene and polymerization units derived from CF₂=CF(OCF₂CFX)ₘ-Oₚ-(CF₂)ₙSO₃H (wherein X is a fluorine atom or a trifluoromethyl group, A is a sulfonic acid group or its precursor, m is an integer of from 0 to 3, n is an integer of from 0 to 12, and p is 0 or 1, provided that when n is 0, p is also 0).

7. A membrane-electrode assembly for solid polymer electrolyte fuel cells which comprises a cation exchange membrane as a solid polymer electrolyte membrane and electrodes having a catalyst layer containing a catalyst as a cathode and an anode bonded onto both sides of the cation exchange membrane, wherein the catalyst layer of the cathode and/or the catalyst layer of the anode comprises a fluorinated polymer having sulfonic acid groups as an ion exchange polymer, a fibrilliform fluorocarbon polymer and a catalyst.

8. The membrane-electrode assembly for solid polymer electrolyte fuel cells according to Claim 7, wherein the catalyst layer of the cathode and/or the catalyst layer of the anode contains the fibrilliform fluorocarbon polymer in an amount of from 0.5 to 15 mass% of the total amount of the fibrilliform fluorocarbon polymer and the fluorinated polymer having sulfonic acid groups.

9. The membrane-electrode assembly for solid polymer electrolyte fuel cells according to Claim 7 or 8, wherein the cation exchange membrane comprises a fluorinated polymer having sulfonic acid groups as an ion exchange polymer and a fibrilliform fluorocarbon polymer.

10. The membrane-electrode assembly for solid polymer electrolyte fuel cells according to any one of Claims 7 to 9, wherein the fibrilliform fluorocarbon polymer is a polytetrafluoroethylene or a copolymer comprising at least 95 mol% of polymerization units derived from tetrafluoroethylene.

11. A solid polymer electrolyte fuel cell which comprises a membrane-electrode assembly for solid polymer electrolyte fuel cells comprising a cation exchange membrane as a solid polymer electrolyte membrane, electrodes having a catalyst layer containing a catalyst as a cathode and an anode bonded onto both sides of the cation exchange membrane, wherein the catalyst layer of the cathode and/or the catalyst layer of the anode comprises a fluorinated polymer having sulfonic acid groups as an ion exchange polymer, a fibrilliform fluorocarbon polymer and a catalyst, and an oxygen-containing gas and a hydrogen-containing gas are fed to the cathode and the anode, respectively.

12. The solid polymer electrolyte fuel cell according to Claim 11, wherein the cation exchange membrane comprises a fluorinated polymer having sulfonic acid groups as an ion exchange polymer and a fibrilliform fluorocarbon polymer.

13. The solid polymer electrolyte fuel cell according to Claim 11 or 12, wherein the catalyst layer of the cathode and/or the catalyst layer of the anode contains the fibrilliform fluorocarbon polymer in an amount of from 0.5 to 15 mass% of the total amount of the fibrilliform fluorocarbon polymer and the fluorinated polymer having sulfonic acid groups.
